(19) Europäisches Patentamt
European Patent Office
Office européen des brevets

(11) Veröffentlichungsnummer : **0 153 456**
**B1**

(12) # EUROPÄISCHE PATENTSCHRIFT

(45) Veröffentlichungstag der Patentschrift : **15.06.88**

(51) Int. Cl.⁴ : **C 08 G 18/10**

(21) Anmeldenummer : **84113972.8**

(22) Anmeldetag : **19.11.84**

(54) **Chemisch härtende Zweikomponentenmasse auf der Basis von Polyurethan-Präpolymeren, Verfahren zur Herstellung eines Polyurethan und Verwendung der Zweikomponentenmasse.**

(30) Priorität : **27.02.84 DE 3407031**

(43) Veröffentlichungstag der Anmeldung : **04.09.85 Patentblatt 85/36**

(45) Bekanntmachung des Hinweises auf die Patenterteilung : **15.06.88 Patentblatt 88/24**

(84) Benannte Vertragsstaaten : **AT BE CH DE FR GB IT LI LU NL SE**

(56) Entgegenhaltungen :
**AT-B- 337 982**
**DE-A- 2 940 856**
**FR-A- 1 331 217**
**US-A- 3 666 835**

(73) Patentinhaber : **Gurit-Essex AG**
**CH-8807 Freienbach (CH)**

(72) Erfinder : **Schönbächler, Max**
**Felsenrain 18 B**
**CH-8832 Wollerau (CH)**
Erfinder : **Saur, Wolfgang, Dr.**
**Schwerzistrasse 4**
**CH-8708 Männedorf (CH)**

(74) Vertreter : **Rottmann, Maximilian R.**
**c/o Rottmann + Quehl AG Glattalstrasse 37**
**CH-8052 Zürich (CH)**

**EP 0 153 456 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Zweikomponentenmasse nach dem Oberbegriff des Patentanspruchs 1, die Verwendung derselben, sowie ein Verfahren zur Herstellung eines Polyurethans durch Aushärten einer Zweikomponentenmasse nach dem Oberbegriff des Patentanspruches 10.

Härtbare Polyurethane sind in der Literatur vielfach beschrieben worden. In der USA-Patentschrift 3 933 725 beispielsweise ist die Herstellung von härtbaren Oligourethanen durch Umsetzung von Diphenylmethandiisocyanaten mit Polyoxypropylendiolen und Polyoxypropylentriolen in einem einstufigen Verfahrenschritt beschrieben.

In der USA-Patentschrift 3 707 521 ist die Herstellung von Oligourethanen durch Umsetzung von überschüssigen Mengen von Diisocyanaten mit Polyoxyalkylendiolen beschrieben, wobei Produkte erhalten werden, deren noch intakte Isocyanat-Gruppen in einer zweiten Stufe mit Polyoxyalkylentriolen umgesetzt werden, wobei ein verzweigtes Polyurethan gebildet wird, welches immer noch freie Isocyanat-Gruppen enthält.

Die nach diesen Patentschriften oder auf ähnliche Weise erhaltenen Produkte weisen den Nachteil auf, dass sie unter Kohlendioxyd-Abspaltung aushärten. Die Aushärtung von feuchtigkeitsreaktiven Oligourethanen $R—N=C=0$ kann etwa durch das folgende Reaktionsschema veranschaulicht werden :

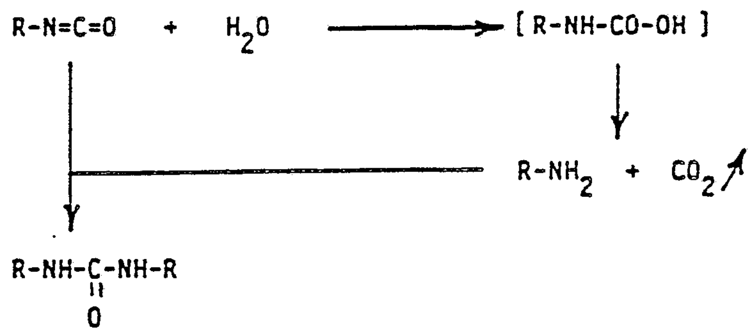

Die Feuchtigkeitshärtung kann zu unerwünschter Blasenbildung führen, während die Aushärtungsgeschwindigkeit stark abhängig von vorhandener Luftfeuchtigkeit und daher schwierig zu kontrollieren ist. Die Aushärtung erfolgt sehr langsam von den äusseren Schichten nach innen und nicht wie bei Zweikomponentenprodukten in der gesamten Masse gleichzeitig.

In der DE-A 30 19 356 ist die Härtung von Isocyanat-gruppen-haltigen Oligourethanen mit latenten Härtern, z. B. Aldiminen und Oxazolidinen, beschrieben. Ausserdem sind als latente Härter auch Di-Enamine empfohlen worden. Unter diesen Bedingungen ist die Aushärtungsgeschwindigkeit trotz Zusatz der latenten Härter immer noch vom Feuchtigkeitsangebot aus der Umgebung und der Diffusionsgeschwindigkeit abhängig. Die Erhärtung erfolgt auch hier allmählich von aussen nach innen und erfordert insbesondere bei grösseren Schichtdicken längere Zeit.

Als Blockierungsmittel für Isocyanat-Funktionen in Polyurethanen sind Methylolether, Malonsäureester, Caprolactame, Phenole und Ketoxime empfohlen worden. Vergl. dazu DE-A 29 46 085, 25 42 500, 25 50 156 und 29 29 224. Die Härtung mit Blockierungsmitteln hat den Nachteil, dass sie höhere Temperaturen erfordert, wobei zum Teil flüchtige Spaltprodukte entstehen, die zu Blasenbildung Anlass geben können.

In der USA-Patentschrift 3 054 755 ist ein Polyurethan beschrieben, welches durch Umsetzung eines Polyisocyanates mit einem Polyalkylenglykol (Polyalkylenetherglykol) und nachfolgende Umsetzung mit einem Aminoalkohol entstanden ist. In der USA-Patentschrift 3 228 914 ist die Umsetzung eines Isocyanat-gruppen-haltigen Präpolymers mit einem Aminoalkohol beschrieben. Dieses Material wird schliesslich durch Zusatz eines monomeren aromatischen Diisocyanates bei erhöhter Temperatur und unter Druck gehärtet. In der USA-Patentschrift 3 114 734 sind Verbindungen beschrieben, welche durch Reaktion von Aminomercaptanen und Dimercaptanen mit endständigen Isocyanat-Gruppen von Polyurethanharzen entstanden sind. Dieses Material wird durch Oxydation der Mercapto-Gruppen vulkanisiert.

Die vorstehend beschriebenen Zweikomponenten-Systeme haben den Nachteil, dass deren Komponenten gewöhnlich in genau stöchiometrischen Mischungsverhältnissen eingesetzt werden müssen ; sonst entstehen Produkte mit sehr unterschiedlichen, oft ungenügenden physikalischen Eigenschaften und der Aushärtungsgrad bleibt dem Zufall überlassen. In Fällen, wo kein stöchiometrisches Mischungsverhältnis verlangt wird, handelt es sich gewöhnlich um niedermolekulare Vernetzungsmittel. Dabei erfolgt die Aushärtung gewöhnlich zu rasch, was die Handhabung äusserst erschwert. Ausserdem entstehen dabei Produkte, die häufig nicht die gewünschten physikalischen Eigenschaften aufweisen.

In der AT-A 337 982 und in der US-A 3 666 835 werden NCO-terminierte Präpolymere mit Glykolen zu OH-terminierten Präpolymeren umgesetzt. Dieses Vorgehen ist auf die erfindungsgemässen Präpolymere

mit einer Funktionalität der darin verwendeten Polyole von mindestens 2,2 nicht anwendbar, da es zu mindestens teilvernetzten Produkten führen würde.

Gemäss der FR-A 1 331 217 werden Präpolymere mit eingebauten Harnstoffgruppen durch Umsetzung eines Polyoxyalkylen-polyols mit einem Diisocyanat und einem Diamin, Aminoalkohol oder Hydroxyharnstoff hergestellt. Diese werden mit einem NCO-terminierten Präpolymer gemischt und heiss gehärtet. Beide Komponenten sind pulverförmige bzw. pelletisierte Feststoffe, die nach dem Vermischen nicht spontan reagieren, sondern lagerfähige Gemische bilden.

Aufgabe der Erfindung ist, eine Zweikomponentenmasse zu entwickeln, bei der die üblichen Einkomponenten-Oligourethane mit noch freien Isocyanat-Gruppen durch Zumischung einer zweiten Komponente verarbeitet werden, wobei gegenüber dem Stande der Technik folgende Verbesserungen angestrebt werden :

— Die beiden Komponenten sollen in einem breit variierbaren Mischungsverhältnis miteinander verarbeitet werden können, ohne dass dabei Einbussen in der Qualität in Kauf genommen werden müssen.

— Die beiden Komponenten sollen nach dem Mischen unmittelbar reagieren und im ausgehärteten Zustand sollen die Produkte einheitlich homogen und stabil sein.

— Es soll eine wesentlich schnellere und vollständigere Durchhärtung erreicht werden als mit feuchtigkeitsreaktiven Oligourethanen.

— Blasenbildungen durch Entwicklung von Kohlensäure oder anderen flüchtigen Reaktionskomponenten sollen im allgemeinen vermieden werden.

— Die Handhabung soll wesentlich vereinfacht werden.

Diese Erfindungsaufgabe wird mit einer Zweikomponentenmasse gelöst, die die im kennzeichnenden Teil des Patentanspruchs 1 definierten Merkmale aufweist. Weiterbildungen und besondere Ausführungsformen der erfindungsgemässen Zweikomponentenmasse sind in den abhängigen Ansprüchen 2-9 umschrieben.

Im weiteren betrifft die Erfindung ein Verfahren zur Herstellung eines Polyurethans durch Aushärten einer Zweikomponentenmasse nach dem Anspruch 10 und die Verwendung solcher Zweikomponentenmassen nach dem Anspruch 19.

Damit kann dem Techniker eine einfache Beschichtungs-, Dichtungs- oder Klebemasse in die Hand gegeben werden, die nach rascher Aushärtung optimale physikalische Eigenschaften, insbesondere verbessertes Rückstellvermögen, verbesserte Bruchlast, Bruchdehnung, Weiterreissfestigkeit und gleichmässige Härte aufweist.

Ein wesentlicher Vorteil der erfindungsgemässen Zweikomponentenmassen ist, dass ihre vorteilhaften Eigenschaften nicht an eng fixierte Mischungsverhältnisse der Komponenten gebunden sind. Sie lassen sich besonders leicht und praktisch handhaben und verarbeiten. Insbesondere härten sie rasch und vollständig aus, also auch in der Tiefe, ohne dass dabei stark erwärmt werden muss oder Gasbildung auftritt.

Das vereinfachte Schema eines Beispiels soll als Illustration dienen :

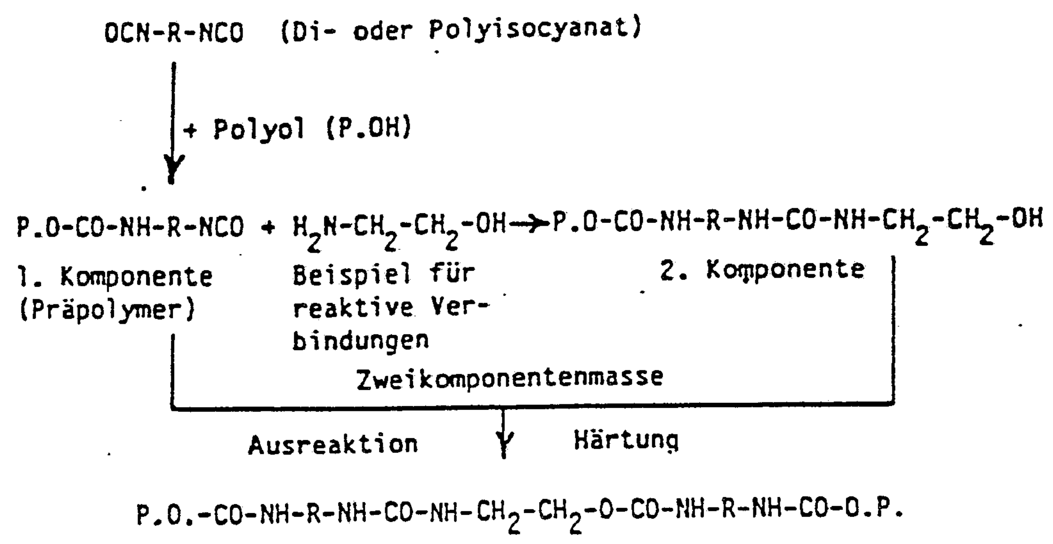


Als Polyole zur Herstellung des Präpolymers kann man Polyether, Polythioether, Polyester, Polycaprolactone, Polycarbonate, Polyacrylate, Polymethacrylate, Polyurethane und Kohlenwasserstoff-Polymere mit jeweils mindestens zwei Hydroxylgruppen im Molekül verwenden. Sie weisen ein mittleres Molekulargewicht von mehr als 1000, gewöhnlich von 2 500 bis 7 000 und eine OH-Funktionalität von 2,2 bis 4 auf. Die Polyether können z. B. durch Polymerisation von Epoxiden wie Ethylenoxid, Propylenoxid, Butylenoxid, Tetrahydrofuran, Styryloxid oder Epichlorhydrin mit sich selbst oder durch Anlagerung

dieser Epoxide, insbesondere von Propylenoxid, an Startkomponenten mit reaktionsfähigen Wasserstoffatomen wie Wasser, Alkohole, Amine, z. B. Ethylenglykol, Propandiol-1,2 und -1,3, Butandiol-1,2 und -1,4, Hexandiol-1,6, Trimethylolpropan, Hexantriol, Glycerin, Triethanolamin, Sorbit, Mannit, Sucrose, Ammoniak, Ethanolamin, Ethylendiamin oder Hexamethylendiamin hergestellt werden.

Geeignete Polyester sind z. B. Umsetzungsprodukte von mehrwertigen, gewöhnlich von zweiwertigen und zusätzlich von dreiwertigen Alkoholen mit mehrwertigen, gewöhnlich mit zweiwertigen Carbonsäuren bzw. Carbonsäureanhydriden oder Carbonsäureestern mit niedrigen Alkoholen. Als Carbonsäure kommen in Betracht : Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Tetrachlorphthalsäureanhydrid, Glutarsäureanhydrid, Maleinsäureanhydrid, Fumarsäure, Terephthalsäuredimethylester und Terephthalsäure-bis-glykolester. Als mehrwertige Alkohole kommen z. B. in Betracht : Ethylenglykol, Propylenglykol-1,2 und -1,3, Butylenglykol-1,4 und -2,3, Hexandiol-1,6, Octandiol-1,8, Glycerin, Trimethylolpropan, Pentaerythrit, Chinit, Mannit und Sorbit, Methylglykosid, ferner Diethylenglykol, Polyethylenglykole, Dipropylenglykol, Polypropylenglykole.

Für die Herstellung der Präpolymere geeignete hydroxylgruppenhaltige Polyacrylate bzw. Polymethacrylate werden hergestellt durch Polymerisation von Verbindungen der allgemeinen Formel

$$CH_2{=}CH{-}CO{-}O{-}R{-}OH \quad \text{bzw.} \quad CH_2{=}\overset{\displaystyle CH_3}{\overset{|}{C}}{-}CO{-}O{-}R{-}OH$$

worin R ein niedriger Alkylenrest mit 2 bis 6 C-Atomen ist oder durch Copolymerisation dieser Verbindungen mit anderen polymerisierbaren äthylenisch ungesättigten Verbindungen mit 2 bis 10 C-Atomen im Molekül (z. B. Styrol, Acrylsäure, Fumeratin, Propylen, Vinylchlorid und Butadien).

Als Hydroxylgruppen aufweisende Polycarbonate kommen solche in Betracht, die z. B. durch Umsetzung von Diolen wie Propandiol-(1,3), Butandiol-(1,4) und/oder Hexandiol-(1,6), Diethylenglykol, Triethylenglykol, Tetraethylenglykol mit Diarylcarbonaten, z. B. mit Diphenylcarbonat oder Phosgen hergestellt werden können.

Hydroxygruppen-haltige Polyurethane, welche als Polyole verwendet werden können, weisen ein Molgewicht von 2 000 bis 10 000, gewöhnlich von 4 000 bis 8 000 auf. Sie müssen ihrer hohen Viskosität wegen in sogenannten Weichmacherölen, das sind in der Regel Phthalate, umgesetzt werden. In Betracht kommen dazu etwa Dibutyl-, Dioctyl-, Diisodecyl-, Dibenzyl- oder Butylbenzyl-phthalate.

In einigen Fällen kann es zweckmässig sein, die Reaktion durch den Zusatz von Katalysatoren wie z. B. von Zinnsalzen von Carbonsäuren zu beschleunigen. Dazu kommen in Betracht : Zinn-acetat, Zinnoctat, Zinn-laurat, Zinn-oleat oder Di-alkyl-zinn-dicarboxylate wie Dibutylzinndiacetat oder Dibutylzinndilaurat usw. sowie Zinnmercaptide oder tertiäre Amine.

Vorzugsweise wird das zum Aufbau der zweiten Komponente der Zweikomponentenmasse verwendete Präpolymer aus Ausgangsstoffen gleicher chemischer Zusammensetzung hergestellt wie das in der ersten Komponente enthaltene Präpolymer (a). Das zum Aufbau der zweiten Komponente verwendete Präpolymer kann dabei den 0,5- bis 1,5-, vorzugsweise den 0,8- bis 1,2-fachen NCO-Gehalt wie das in der ersten Komponente enthaltene Präpolymer (a) aufweisen.

Im allgemeinen wird für die erste Komponente ein Präpolymer (a) verwendet, das auch für die Herstellung des Präpolymeren (b), der zweiten Komponente dient, weil dies einfacher ist, die Produkte eine einheitlichere Zusammensetzung aufweisen und sich die beiden Komponenten innerhalb eines breiteren Verhältnisses miteinander umsetzen lassen, ohne dass sich die Eigenschaften ändern.

Um bestimme Effekte, z. B. um eine grössere Vernetzung in der einen Komponente zu erzielen, kann das Präpolymer für die eine Komponente etwa aus einem Polyisocyanat, das Präpolymer für die andere Komponente aus einem Diisocyanat hergestellt werden. Durch die Wahl verschiedener Polyole für die Herstellung der Präpolymere ergeben sich analoge Differenzierungsmöglichkeiten.

Die zweite Komponente enthält ein Umsetzungsprodukt eines Präpolymers (a) mit einem Mercaptoalkohol, Aminoalkohol, einer Hydroxy-, Thio- oder Aminocarbonsäure, welche 2 bis 6, vorzugsweise 2 bis 3, insbesondere 2 reaktive, Wasserstoff enthaltende Molekülgruppen aufweisen.

Individuelle Beispiele für solche Substanzen sind Mercaptoethanol, Mercaptopropandiol, Dimercaptopropanol, Aminoethanol, Aminopropanol, Aminopropandiol, N-Methylaminoethanol, N-Methylaminopropandiol, N-Methylglukamin, Aminophenol, Hydroxyethylpiperazin, Glykolsäure, Milchsäure, Thioglykolsäure, Thiomilchsäure, Aminoessigsäure oder Lysin.

Konkrete Mengenverhältnisse bei den erfindungsgemäss erforderlichen drei Umsetzungen können wie folgt angegeben werden

1. Bei der Umsetzung von Di- und Polyisocyanaten mit Polyolen zu den Präpolymeren (a) werden die Mischungsverhältnisse so gewählt, dass noch freie Isocyanat-Endgruppen übrig bleiben ; diese werden einerseits für die Schlussstufe oder für die Bereitung der zweiten Komponente benötigt. Das Aequivalentverhältnis von Isocyanat- zu Hydroxy-Funktionen beträgt 1,3 bis 3 : 1. Als besonders zweckmässig hat sich das Aequivalentverhältnis 1.5 bis 2.2 : 1 erwiesen.

2. Für die Umsetzung des so erhaltenen Präpolymers (a) zum Präpolymer (b) der zweiten Komponente werden pro Äquivalent vorhandene Isocyanat-Funktion 0.8 bis 1.2 Mol der oben definierten reaktiven Verbindung verwendet, die mindestens zwei reaktive Wasserstoffatome enthaltende Gruppen im Molekül aufweist. Damit wird erreicht, dass das Umsetzungsprodukt, d. h. die zweite Komponente, reaktive Gruppen aufweist, die mit den Isocyanat-Gruppen der ersten Komponente reagieren können.

3. Das Mischungsverhältnis für die Schlussstufe, d. h. für die beiden Komponenten, ist nicht kritisch. Das Äquivalent-Verhältnis NCO : H (aktiv) kann innerhalb 0,8 : 1 bis 5 : 1 variieren ; bevorzugt ist der Bereich von 1 : 1 bis 5 : 1, besonders bevorzugt 1,2 : 1 bis 2 : 1. Damit ist im allgemeinen dafür Sorge getragen, dass die Mischung auch bei Schwankungen im Mischungsverhältnis gegebenenfalls mit immer vorhandener Luftfeuchtigkeit zum Endzustand ausreagiert.

Allgemeine Reaktionsbedingungen

Die Umsetzungen zur Herstellung der beiden Komponenten werden bei einer Temperatur von 20 bis 130 °C, insbesondere im Bereich von 40 bis 80 °C unter Rühren und gewöhnlich unter einem Schutzgas wie beispielsweise Stickstoff durchgeführt. Wie weiter oben ausgeführt, ist die Umsetzung in Lösungsmitteln möglich, und falls die Reaktionskomponenten nicht genügend fliessfähig sind, auch notwendig. In vielen Fällen kann jedoch auf ein Lösungsmittel verzichtet werden. Auch die Anwendung von Katalysatoren für die Beschleunigung der Isocynat-Reaktionen, wie sie weiter oben beschrieben wurden, ist möglich und bei Umsetzung verhältnismässig hoch-molekularer Komponenten auch zweckmässig. Durch Zusatz oder Weglassen von Katalysatoren kann die Lagerfähigkeit der Komponenten und können die Aushärtezeiten beeinflusst werden.

Die erfindungsgemässen Zweikomponentenmassen werden als Klebe-, Beschichtungs-, Dichtungs- und Giessmassen im Bauwesen, Fahrzeug-, Flugzeug- und Schiffsbau verwendet. Als Klebemassen dienen sie etwa zum Abdichten und Verkleben von Isolierglasscheiben bei Bauten oder von Glasscheiben im Fahr- und Flugzeugbau. Als Beschichtungs- und Dichtungsmasse finden sie ausgedehnte Verwendung zur Herstellung von dickschichtigen Beschichtungen, beispielsweise zur Abdichtung von Betonbauwerken, für Dachbeschichtungen, für Bodenbeläge, als Teppichunterlagen, allgemein als abriebfeste und rutschfeste Beläge, als Steinschlagschutz sowie im Fahrzeug-, Flugzeug- und Schiffsbau. Als Giessmassen bzw. Giessharze werden sie für die Herstellung von Abformmassen und für Vergussmassen z. B. auf dem Elektrosektor sowie für Formteile aller Art verwendet.

Gewöhnlich werden diese Zweikomponentenmassen nicht in reiner Form angewendet, sondern zusammen mit weiteren Hilfs- und Zusatzmitteln wie z. B. Weichmachern, Lösungsmitteln, Füll- und Streckmitteln, Verdickungsmitteln, Alterungsschutzmitteln sowie speziellen Zusatzstoffen zur Erzielung bestimmter Eigenschaften, wie beispielsweise Silanen zur Verbesserung der Haftungseigenschaften. Auch durch die Anwendung von an sich bekannten Primern oder Grundierungen, z. B. auf Silan- und/oder Isocyanatbasis, kann auf diversen Substraten eine sehr gute Haftung erzielt werden.

Für die Brandschutz-Ausrüstung können flammhemmende Zusatzstoffe, wie z. B. Aluminiumoxidhydrat, Antimontrioxid oder halogen-haltige Zusatzstoffe, wie z. B. PVC-Pulver mitverwendet werden ; zur Erhöhung der elektrischen Leitfähigkeit können den Massen beispielsweise Graphit oder Metallpulver zugefügt werden. Der Zusatz von Gummimehl bzw. von Gummigranulat zur Verbilligung und Verbesserung der Abriebeigenschaften ist ebenfalls möglich.

Die wesentlichen Vorteile der erfindungsgemässen Zweikomponentenmassen sind

1. Da bei einem Überschuss der ersten Komponente die überschüssigen NCO-Gruppen durch Luftfeuchtigkeit gehärtet werden, kann das Mischungsverhältnis der beiden Komponenten innerhalb weiter Grenzen variieren (1. Komp. zu 2. Komp. = 0.8 : 1 bis 5 : 1) ohne dass sich die Eigenschaften des erhaltenen Produktes wesentlich ändern. Für die Verarbeitungstechnik von Zweikomponentenmassen, die gewöhnlich nicht in der Hand von chemisch ausgebildeten Fachleuten liegt, ist dies eine ganz wesentliche Erleichterung und garantiert Produkte immer gleicher Qualität auch unter einfachen, ja primitiven Arbeitsbedingungen. Im Gegensatz dazu müssen bei den aus der Literatur und Praxis bekannten Zweikomponentenmassen die Mischungsverhältnisse ziemlich exakt eingehalten werden, um Produkte mit den erforderlichen Eigenschaften zu erhalten. Abweichungen vom vorgeschriebenen Mischungsverhältnis von mehr als 10-15 % können bereits erhebliche Qualitätseinbussen zur Folge haben.

2. Bei Anwendungen der 1. und 2. Komponente im bevorzugten Mischungsverhältnis von etwa 1 : 1 bis 2 : 1 oder mehr, wird ein Produkt erhalten, das ohne Mitwirkung von Luftfeuchtigkeit rasch und vollständig vernetzt und auch in der Tiefe ebenso rasch wie an der Oberfläche ausreagiert. Hier liegt der grosse Vorteil gegenüber den feuchtigkeitsreaktiven, Isocyanat-Restgruppen enthaltenden Oligourethanmassen, die unter der Einwirkung von Luftfeuchtigkeit von der Oberfläche her vernetzt und ausgehärtet werden, wobei Kohlendioxid freigesetzt wird, was zu porösen und gasblasenhaltigen Massen führt. Die Vernetzung und Aushärtung in tieferen Schichten der Masse kann Monate erfordern.

## Beispiel 1

A. Erste Komponente (Präpolymer)

4 500 g eines Polyetherdiols mit einem mittleren Molgewicht von 2 000 werden mit 1 250 g 4,4'-Diphenylmethandiisocyanat versetzt und unter Stickstoff bei 70 °C unter Rühren reagieren gelassen. Nun werden 2 900 g Dioctylphthalat zugesetzt und die Masse wird bei 70 °C weiter reagieren gelassen. Danach werden 2 200 g Polyethertriol mit einem mittleren Molgewicht von 4 500 und 12 g Dibutylzinndilaurat zugefügt. Nach abgeschlossener exothermer Reaktion, bei welcher die Temperatur 110 °C nicht übersteigen darf, ist ein Präpolymer mit einem Isocyanat-Gehalt von 1,6 % entstanden.

B. Zweite Komponente

5 800 g des nach obigem Beispiel 1 A erhaltenen Präpolymers werden mit 166 g 2-Mercaptoethanol versetzt und bei 40 °C so lange gerührt, bis das Infrarot (IR)-Spektrum keine Isocyanatgruppen mehr erkennen lässt. Man erhält eine klaren, gelbliche Flüssigkeit mit einer Viskosität von ca. 140 Pa · s bei 23 °C.

C. Elastische Beschichtungsmasse

100 g der ersten Komponente werden mit 100 g der zweiten Komponente vermischt und auf eine Glasplatte gegossen, derart, daß eine etwa 2 mm dicke Schicht entsteht. Nach etwa 8 Stunden ist die Masse vernetzt und kann von der Platte abgezogen werden. Das so erhaltene Elastomer weist eine gute Elastizität und Zugfestigkeit auf.

## Beispiel 2

Wenn man analog wie im Beispiel 1 C vorgeht, jedoch statt 100 g nur 75 g der zweiten Komponente verwendet, so entsteht nach 8 Stunden ein ähnliches Elastomer, das seine volle Elastizität und Zugfestigkeit erst nach einer Lagerung von etwa 16 Stunden erreicht.

## Beispiel 3

Ein ähnliches Resultat, wie im Beispiel 2 beschrieben, erhält man, wenn man nur 50 g der zweiten Komponente verwendet.

## Beispiel 4

A. 7 000 g der nach Beispiel 1 A hergestellten ersten Komponente (Präpolymer) werden mit 1 000 g Russ und 2 000 g Kaolin in einem Planetenmischer unter Vakuum homogen vermischt. Anschliessend werden 60 g einer Dibutylzinndilaurat-Lösung zugefügt und unter Vakuum homogen eingemischt. Man erhält eine zähviskose, nicht fliessende Masse, welche in Kartuschen abgefüllt wird.

B. 7 000 g der nach Beispiel 1 B hergestellten zweiten Komponente werden in gleicher Weise mit Russ, Kaolin und Katalysator homogen vermischt und abgefüllt.

C. 100 g der nach Beispiel 4 A hergestellten Masse werden mit 50 g der nach Beispiel 4 B hergestellten Masse vermischt. Man erhält innert weniger Stunden eine zugfeste Dichtungsmasse, deren Eigenschaften in der Tabelle 1 auf Seite 20 aufgeführt sind.

## Beispiel 5

Wenn man analog Beispiel 4 100 g 4 A mit 70 g 4 B mischt, so erhält man eine Dichtungsmasse mit ähnlichen Eigenschaften.

## Beispiel 6

Wenn man analog Beispiel 4 100 g 4 A mit 100 g 4 B mischt, so erhält man eine Dichtungsmasse, die ähnliche Eigenschaften aufweist, jedoch etwas schneller vernetzt als die Masse nach Beispielen 4 und 5.

(Siehe Tabelle 1 Seite 7 f.)

Tabelle 1
Dichtungsmasse nach Beispiel

| | 4 | 5 | 6 |
|---|---|---|---|
| Verarbeitungszeit | ca. 15 Min. | ca. 15 Min. | ca. 15 Min. |
| Klebefrei nach | 2 h | 1 1/2 h | 1 h |
| Zugfestigkeit | | | |
| nach 1 h | 0.5 $N/mm^2$ | 0.8 $N/mm^2$ | 1 $N/mm^2$ |
| nach 12 h | 3.5 $N/mm^2$ | 3.5 $N/mm^2$ | 3.5 $N/mm^2$ |

Aus der Tabelle ist ersichtlich, dass durch Variation des Mischungsverhältnisses der beiden Komponenten die Eigenschaften nur verhältnismässig geringfügig verändert werden.

Beispiele 7 bis 9

A. Herstellung der zweiten Komponente

Diese erfolgt analog Beispiel 1 B, wobei das 2-Mercaptoethanol durch 161 g Monomethylethanolamin ersetzt wird.

B. Herstellung der Dichtungsmasse

Diese erfolgt analog Beispiel 4 mit jeweils 100 g erster Komponente und 50, 70 und 100 g der zweiten Komponente unter Weglassen des im Beispiel 4 verwendeten Katalysators.

Die Eigenschaften der Produkte gehen aus der nachfolgenden Tabelle 2 hervor

Tabelle 2
Dichtungsmasse nach Beispiel 8

| | 7 | 8 | 9 |
|---|---|---|---|
| 1. Komponente | 100 g | 100 g | 100 g |
| 2. Komponente | 50 g | 70 g | 100 g |
| Verarbeitungszeit | ca. 3 Min. | ca. 3 Min. | ca. 3 Min. |
| Klebefrei nach | 20 Min. | 20 Min. | 20 Min. |
| Zugfestigkeit | | | |
| nach 1 h | 2 $N/mm^2$ | 2 $N/mm^2$ | 2 $N/mm^2$ |
| nach 4 h | 3.5 $N/mm^2$ | 3.5 $N/mm^2$ | 3.5 $N/mm^2$ |

Beispiele 10 bis 12

A. Herstellung der zweiten Komponente

Diese erfolgt analog Beispiel 1 B, wobei anstelle von 2-Mercaptoethanol 275 g N-(2-Hydroxyethyl)-piperazin eingesetzt werden.

B. Herstellung der Beschichtungsmasse

Jeweils 100 g der ersten Komponente von Beispiel 1 A werden mit 100, 70 und 50 g der zweiten Komponente, die nach obiger Vorschrift A mit N-(2-Hydroxyethyl)-piperazin hergestellt wurde, homogen vermischt. Die Mischung wird auf Glasplatten ausgegossen, so dass eine ca. 2 mm dicke Schicht entsteht.

Bereits nach 2 Stunden sind die Massen so stark vernetzt, dass der Film von der Glasplatte abgezogen werden kann. Nach weiteren 4 Stunden Lagerung bei Raumtemperatur weisen die Filme eine sehr gute Elastizität und Festigkeit auf.

Beispiele 13 bis 36

Analog wie im Beispiel 1 beschrieben, können Dichtungsmassen erzeugt werden, wenn man 4,4'-Diphenylmethandiisocyanat ersetzt durch die äquivalente Menge von

13. Toluylendiisocyanat
14. Diphenylmethandiisocyanat-Isomerengemisch
15. 4,4'-Diphenyldiisocyanat
16. 4,4'-Diisocyanato-3,3'-dichlor-diphenyl
17. 4,4'-Diisocyanato-3,3'-dimethoxy-diphenyl
18. 4,4'-Diisocyanato-3,3'-diphenyl-diphenyl
19. 4,4'-Diisocyanato-3,3'-dimethyl-diphenylmethan
20. 1,5-Naphthylen-diisocyanat
21. N,N'-(4,4'-Dimethyl-3,3'-diisocyanato-diphenyl)-uretdion
22. m-Xylylen-diisocyanat
23. 2,4,4'-Triisocyanato-diphenylether
24. 4',4'4"-Triphenylmethan-triisocyanat
25. Tris-(4-isocyanatophenyl)-thiophosphat
26. 1,6-Hexamethylendiisocyanat
27. Trimethylhexamethylendiisocyanat
28. 3-Isocyanatomethyl-3,5,5-trimethylcyclohexylisocyanat (Isophorondiisocyanat)
29. Trans-1,4-cyclohexandiisocyanat
30. p-Phenylendiisocyanat
31. Tetramethyl-xylylen-diisocyanat
32. 4,4'-Dicyclohexylmethandiisocyanat
33. 2,2-Bis-[4-(6-isocyanato-hexanoyl-oxy)-phenyl]-propan
34. Polymethylen-polyphenylisocyanat
35. Desmodur L (geschützte Handelsbezeichnung von Bayer, Leverkusen)
36. Desmodur N (geschützte Handelsbezeichnung von Bayer, Leverkusen)

Beispiele 37 bis 49

Analog wie in den Beispielen 1 und 4 beschrieben, können Klebe-, Beschichtungs-, Dichtungs- und Giessmassen hergestellt werden, wenn man das im Beispiel 1 B genannte 2-Mercaptoethanol ersetzt durch die äquimolare Menge von

37. Lysin
38. Dimercaptopropanol
39. Mercaptopropandiol
40. Aminoethanol
41. Aminopropandiol
42. N-Methylaminoethanol
43. N-Methylglukamin
44. Aminophenol
45. Glykolsäure
46. Milchsäure
47. Thioglykolsäure
48. Thiomilchsäure
49. Aminoessigsäure

Beispiel 51

A. Herstellung von Präpolymer

2 000 g eines Hydroxygruppen-haltigen Polyurethans mit einem mittleren Molgewicht von 5 000 und einer OH-Zahl von 28 werden mit 2 700 g Dibutylphthalat und 10 g Dibutylzinndiacetat vermischt. Nun werden 350 g 4,4'-Diphenylmethandiisocyanat zugesetzt. Unter Rühren lässt man die Masse bei 70 °C reagieren. Nach abgeschlossener Reaktion erhält man ein Präpolymer mit einem Isocyanatgehalt von 1.5 %.

B. Herstellung der zweiten Komponente

6 200 g des nach Beispiel 51 A erhaltenen Präpolymers werden mit 166 g Monomethylethanolamin versetzt und bei 40 °C so lange gerührt, bis das IR-Spektrum keine Isocyanatgruppen mehr erkennen lässt.

C. Giessmasse

100 g der nach Beispiel 1 A hergestellten ersten Komponente (einem aus Polyetherdi- und triolen hergestellten Präpolymer) werden mit 100 g der nach Beispiel 51 hergestellten zweiten Komponente vermischt, wobei eine Giessmasse erhalten wird, die sich etwa für die Herstellung von Abformmassen und Vergussmassen eignet.

**Patentansprüche**

1. Zweikomponentenmasse, umfassend
— eine erste Komponente, welche ein Präpolymeres (a) mit endständigen Isocyanatgruppen enthält, und
— eine zweite Komponente, welche ein Präpolymeres (b) mit endständigen, gegenüber Isocyanatgruppen reaktiven Gruppen enthält, wobei die beiden Komponenten nach dem Mischen eine selbsthärtende Masse bilden, wobei das Präpolymere (a) mit endständigen Isocyanatgruppen durch Umsetzung mindestens eines monomeren Polyisocyanats mit mindestens einem Polyol mit einem Molekulargewicht von mehr als 1 000 in einem NCO/OH-Aequivalentverhältnis von 1.3 : 1 bis 3 : 1 erhalten worden ist, und wobei das in der zweiten Komponente enthaltene Präpolymere (b) durch Umsetzung von 1 Aequivalent eines wie oben definierten Präpolymeren (a) mit endständigen Isocyanatgruppen mit 0.8 bis 1.2 Mol einer Verbindung mit mindestens zwei gegenüber Isocyanatgruppen reaktiven Wasserstoffatomen erhalten worden ist, dadurch gekennzeichnet, dass das zum Aufbau des Präpolymeren (a) verwendete Polyol eine OH-Funktionalität von 2.2 bis 4 aufweist, und dass bei der Herstellung des Präpolymeren (b) ein Präpolymeres (a) mit einem Mercapto- oder Aminoalkohol oder einer Hydroxy-, Mercapto- oder Aminocarbonsäure umgesetzt wird.

2. Zweikomponentenmasse nach Anspruch 1, dadurch gekennzeichnet, dass die Präpolymeren (a) und (b) gleiche Funktionalität aufweisen.

3. Zweikomponentenmasse nach Anspruch 1 oder 2, dadurch gekennzeichnet, dass die Präpolymeren (a) und (b) aus denselben Isocyanaten hergestellt sind.

4. Zweikomponentenmasse nach Anspruch 1 oder 2, dadurch gekennzeichnet, dass die Präpolymeren (a) und (b) aus Polyolen gleicher chemischer Zusammensetzung hergestellt sind.

5. Zweikomponentenmasse nach einem der Ansprüche 1 bis 4, dadurch gekennzeichnet, dass das monomere Polyisocyanat zur Herstellung der Präpolymeren (a) und (b) Toluylendiisocyanat, Diphenylmethandiisocyanat, 4,4'-Diphenyldiisocyanat, 4,4'-Diisocyanato-3,3'-dichlor-diphenyl, 4,4'-Diisocyanato-3,3'-dimethoxy-diphenyl, 4,4'-Diisocyanato-3,3'-diphenyldiphenyl, 4,4'-Diisocyanato-3,3'-dimethyl-diphenylmethan, 1,5-Naphthylen-diisocyanat, N,N'-(4,4'-Dimethyl-3,3'-diisocyanato-diphenyl)-uretdion, m-Xylylendiisocyanat, 2,4,4'-Triisocyanato-diphenyl-ether, 4,4',4''-Triphenylmethan-triisocyanat, Tris-(4-isocyanatophenyl)-thiophosphat, 1,6-Hexamethylendiisocyanat, Trimethylhexamethylendiisocyanat, 3-Isocyanatomethyl-3,5,5-trimethylcyclohexylisocyanat (Isophorondiisocyanat), Trans-1,4-cyclohexandiisocyanat, p-Phenylendiisocyanat, Tetramethyl-xylylendiisocyanat, 4,4'-Dicyclohexylmethandiisocyanat, 2,2-Bis-[4-(6-isocyanato-hexanoyl-oxy)-phenyl]-propan, Polymethylenpolyphenylisocyanat, ein Reaktionsprodukt von Toluoldiisocyanat mit Trimethylolpropan, ein Reaktionsprodukt von Hexamethylendiisocyanat mit Wasser, oder eine Mischung dieser Isocyanate ist.

6. Zweikomponentenmasse nach einem der Ansprüche 1 bis 5, dadurch gekennzeichnet, dass das für die Herstellung des Präpolymeren (b) benutzte Präpolymere den 0,5- bis 1,5-, vorzugsweise den 0,8- bis 1,2-fachen NCO-Gehalt wie das in der ersten Komponente enthaltene Präpolymere (a) aufweist.

7. Zweikomponentenmasse nach Anspruch 1 bis 6, dadurch gekennzeichnet, dass die zur Herstellung des Präpolymeren (b) verwendete, reaktive Verbindung 2 bis 6, vorzugsweise 2 bis 3, insbesondere 2 reaktive, Wasserstoff enthaltende Molekülgruppen enthält.

8. Zweikomponentenmasse nach Anspruch 7, dadurch gekennzeichnet, dass die reaktive Verbindung aus der Gruppe Mercaptoethanol, Mercaptopropandiol, Dimercaptopropanol, Aminoethanol, Aminopropanol, Aminopropandiol, N-Methylaminoethanol, N-Methylglukamin, Aminophenol, Hydroxyethylpiperazin, Glykolsäure, Milchsäure, Thioglykolsäure, Thiomilchsäure, Aminoessigsäure und Lysin ausgewählt wird.

9. Zweikomponentenmasse nach einem der vorangehenden Ansprüche, dadurch gekennzeichnet, dass das Aequivalent-Verhältnis NCO : H (aktiv) der beiden Komponenten von 0,8 : bis 5 : 1, vorzugsweise von 1 : 1 bis 5 : 1, insbesondere von 1,2 : 1 bis 2 : 1 beträgt.

10. Verfahren zur Herstellung eines Polyurethans durch Aushärten einer Zweikomponentenmasse, indem man eine erste Komponente, welche ein Präpolymeres (a) mit endständigen Isocyanatgruppen enthält, und eine zweite Komponente, welche ein Präpolymeres (b) mit endständigen, gegenüber Isocyanatgruppen reaktiven Gruppen enthält, miteinander umsetzt, wobei die beiden Komponenten nach dem Mischen eine selbsthärtende Masse bilden, wobei das Präpolymere (a) mit endständigen Isocyanatgruppen durch Umsetzung mindestens eines monomeren Polyisocyanats mit mindestens einem Polyol mit einem Molekulargewicht von mehr als 1 000 in einem NCO/OH-Aequivalentverhältnis von 1.3 : 1 bis 3 : 1 erhalten worden ist, und wobei das in der zweiten Komponente enthaltene Präpolymere (b) durch Umsetzung von 1 Aequivalent eines wie oben definierten Präpolymeren (a) mit endständigen Isocyanatgruppen mit 0.8 bis 1.2 Mol einer Verbindung mit mindestens zwei gegenüber Isocyanatgruppen reaktiven Wasserstoffatomen erhalten worden ist, dadurch gekennzeichnet, dass das zum Aufbau des Präpolymeren (a) verwendete Polyol eine OH-Funktionalität von 2.2 bis 4 aufweist, und dass bei der Herstellung des Präpolymeren (b) ein Präpolymeres (a) mit einem Mercapto- oder Aminoalkohol oder einer Hydroxy-, Mercapto- oder Aminocarbonsäure umgesetzt wird.

11. Verfahren nach Anspruch 10, dadurch gekennzeichnet, dass die Präpolymeren (a) und (b) gleiche Funktionalität aufweisen.

12. Verfahren nach Anspruch 10 oder 11, dadurch gekennzeichnet, dass die Präpolymeren (a) und (b) aus denselben Isocyanaten hergestellt sind.

13. Verfahren nach Anspruch 10 oder 11, dadurch gekennzeichnet, dass die Präpolymeren (a) und (b) aus Polyolen gleicher chemischer Zusammensetzung hergestellt sind.

14. Verfahren nach einem der Ansprüche 10 bis 13, dadurch gekennzeichnet, dass das monomere Polyisocyanat zur Herstellung der Präpolymeren (a) und (b) Toluylendiisocyanat, Diphenylmethandiisocyanat, 4,4'-Diphenyldiisocyanat, 4,4'-Diisocyanato-3,3'-dichlor-diphenyl, 4,4'-Diisocyanato-3,3'-dimethoxy-diphenyl, 4,4'-Diisocyanato-3,3'-diphenyl-diphenyl, 4,4'-Diisocyanato-3,3'-dimethyl-diphenylmethan, 1,5-Naphthylen-diisocyanat, N,N'-(4,4'-Dimethyl-3,3'-diisocyanato-diphenyl)-uretdion, m-Xylylen-diisocyanat, 2,4,4'-Triisocyanato-diphenyl-ether, 4,4',4"-Triphenylmethan-triisocyanat, Tris-(4-isocyanatophenyl)-thiophosphat, 1,6-Hexamethylendiisocyanat, Trimethylhexamethylendiisocyanat, 3-Isocyanatomethyl-3,5,5-trimethylcyclohexylisocyanat (Isophorondiisocyanat), Trans-1,4-cyclohexandiisocyanat, p-Phenylendiisocyanat, Tetramethyl-xylylendiisocyanat, 4,4'-Dicyclohexylmethandiisocyanat, 2,2-Bis-[4-(6-isocyanato-hexanoyl-oxy)-phenyl]-propan, Polymethylen-polyphenylisocyanat, ein Reaktionsprodukt von Toluoldiisocyanat mit Trimethylolpropan, ein Reaktionsprodukt von Hexamethylendiisocyanat mit Wasser, oder eine Mischung dieser Isocyanate ist.

15. Verfahren nach einem der Ansprüche 10 bis 14, dadurch gekennzeichnet, dass das für die Herstellung des Präpolymeren (b) benutzte Präpolymere den 0,5- bis 1,5-, vorzugsweise den 0,8- bis 1,2-fachen NCO-Gehalt wie das in der ersten Komponente enthaltene Präpolymere (a) aufweist.

16. Verfahren nach Anspruch 10 bis 15, dadurch gekennzeichnet, dass die zur Herstellung des Präpolymeren (b) verwendete, reaktive Verbindung 2 bis 6, vorzugsweise 2 bis 3, insbesondere 2 reaktive, Wasserstoff enthaltende Molekülgruppen enthält.

17. Verfahren nach Anspruch 16, dadurch gekennzeichnet, dass die reaktive Verbindung aus der Gruppe Mercaptoethanol, Mercaptopropandiol, Dimercaptopropanol, Aminoethanol, Aminopropanol, Aminopropandiol, N-Methylaminoethanol, N-Methylglukamin, Aminophenol, Hydroxyethylpiperazin, Glykolsäure, Milchsäure, Thioglykolsäure, Thiomilchsäure, Aminoessigsäure und Lysin ausgewählt wird.

18. Verfahren nach einem der Ansprüche 10 bis 17, dadurch gekennzeichnet, dass das Aequivalent-Verhältnis NCO : H (aktiv) der beiden Komponenten von 0,8 : bis 5 : 1, vorzugsweise von 1 : 1 bis 5 : 1, insbesondere von 1,2 : 1 bis 2 : 1 beträgt.

19. Verwendung von Zweikomponentenmassen nach den Ansprüchen 1 bis 9 als Klebemassen zum Abdichten und Verkleben von Isolierglasscheiben bei Bauten oder von Glasscheiben im Fahr- und Flugzeugbau.

## Claims

1. Two-component material comprising

— a first component, which contains a prepolymer (a) with isocyanate end groups, and

— a second component, which contains a prepolymer (b) with end groups which are reactive with respect to isocyanate groups, the two components forming a self-hardening material after mixing, the prepolymer (a) with isocyanate end groups having been obtained by reacting at least one monomeric polyisocyanate with at least one polyol having a molecular weight of more than 1,000 in an equivalent ratio NCO/OH of 1.3 : 1 to 3 : 1 and the prepolymer (b) contained in the second component having been obtained by reacting one equivalent of a prepolymer (a) as defined above, with isocyanate end groups with 0.8 to 1.2 mols of a compound with at least two hydrogen atoms which are reactive with respect to isocyanate groups, characterised in that the polyol used for the formation of the prepolymer (a) has an OH-functionality of 2.2 to 4 and that in the production of the prepolymer (b), a prepolymer (a) is reacted with a mercapto alcohol or amino alcohol or a hydroxy-, mercapto- or amino-carboxylic acid.

2. Two-component material according to Claim 1, characterised in that the prepolymers (a) and (b) have the same functionality.

3. Two-component material according to Claim 1 or 2, characterised in that the prepolymers (a) and (b) are produced from the same isocyanates.

4. Two-component material according to Claim 1 or 2, characterised in that the prepolymers (a) and (b) are produced from polyols having the same chemical composition.

5. Two-component material according to one of Claims 1 to 4, characterised in that the monomeric poly-isocyanate for the production of the prepolymers (a) and (b) is toluylene diisocyanate, diphenylmethane diisocyanate, 4,4'-diphenyl diisocyanate, 4,4'-diisocyanato-3,3'-dichlor-diphenyl, 4,4'-diisocyanato-3,3'-dimethoxy-diphenyl, 4,4'-diisocyanato-3,3'-diphenyl-diphenyl, 4,4'-diisocyanato-3,3'-dimethyl-diphenylmethane, 1,5-naphthylene-diisocyanate, N,N'-(4,4'-dimethyl-3,3'-diisocyanato-diphenyl)-uretdion, m-xylylene-diisocyanate, 2,4,4'-triisocyanato-diphenyl-ether, 4,4',4''-triphenylmethane-triisocyanate, Tris-(4-isocyanatophenyl)-thio-phosphate, 1,6-hexamethylene diisocyanate, trimethylhexamethylene diisocyanate, 3-isocyanatomethyl-3,5,5-trimethyl cyclohexyl isocyanate (isophoron diisocyanate), Trans-1,4-cyclohexane diisocyanate, p-phenylene diisocyanate, tetramethyl-xylylene diisocyanate, 4,4'-dicyclohexyl methane diisocyanate, 2,2-Bis-[4-(6-isocyanato-hexanoyl-oxy)-phenyl]-propane, polymethylene-polyphenyl isocyanate, a reaction product of toluene diisocyanate with trimethylolpropane, a reaction product of hexamethylene diisocyanate with water, or a mixture of these isocyanates.

6. Two-component material according to one of Claims 1 to 5, characterised in that the prepolymer used for the production of the prepolymer (b) has an NCO-content 0.5 to 1.5, preferably 0.8 to 1.2 times that contained in the prepolymer (a) contained in the first component.

7. Two-component material according to Claims 1 to 6, characterised in that the reactive compound used for the production of the prepolymer (b) contains 2 to 6, preferably 2 to 3, in particular two reactive molecular groups containing hydrogen.

8. Two-component material according to Claim 7, characterised in that the reactive compound is chosen from the group mercapto ethanol, mercapto propane diol, dimercapto propanol, amino ethanol, amino propanol, amino propane diol, N-methyl amino ethanol, N-methyl glucamine, amino phenol, hydroxyethyl piperazine, glycolic acid, lactic acid, thioglycolic acid, thiolactic acid, aminoacetic acid and lysine.

9. Two-component material according to one of the preceding Claims, characterised in that the equivalent ratio NCO : H (active) of the two components is in a range of from 0.8 : 1 to 5 : 1, preferably from 1 : 1 to 5 : 1, in particular from 1.2 : 1 to 2 : 1.

10. Method for producing a polyurethane by hardening a two-component material, in that a first component, which contains a prepolymer (a) with isocyanate end groups, and a second component, which contains a prepolymer (b) with end groups which are reactive with respect to isocyanate groups, are reacted together, the two components forming a self-hardening material after mixing, the prepolymer (a) with isocyanate end groups having been obtained by reacting at least one monomeric polyisocyanate with at least one polyol having a molecular weight of more than 1,000 in an NCO/OH equivalent ratio of 1.3 : 1 to 3 : 1 and the prepolymer (b) contained in the second component having been obtained by reacting one equivalent of a prepolymer (a) as defined above with isocyanate end groups with 0.8 to 1.2 mols of a compound with at least two hydrogen atoms which are reactive with respect to isocyanate groups, characterised in that the polyol used for the formation of the prepolymer (a) has an OH-functionality of 2.2 to 4 and that for the production of the prepolymer (b) a prepolymer (a) is reacted with a mercapto alcohol or an amino alcohol or a hydroxy-, mercapto- or amino- carboxylic acid.

11. Method according to Claim 10, characterised in that the prepolymers (a) and (b) have the same functionality.

12. Method according to Claim 10 or 11, characterised in that the prepolymers (a) and (b) are produced from the same isocyanates.

13. Method according to Claim 10 or 11, characterised in that the prepolymers (a) and (b) are produced from polyols having the same chemical composition.

14. Method according to one of Claims 10 to 13, characterised in that the monomeric polyisocyanate for the production of the prepolymers (a) and (b) is toluylene diisocyanate, diphenyl-methane diisocyanate, 4,4'-diphenyl diisocyanate, 4,4'-diisocyanato-3,3'-dichlor-diphenyl, 4,4'-diisocyanato-3,3'-dimethoxy-diphenyl, 4,4'-diisocyanato-3,3'-diphenyl-diphenyl, 4,4'-diisocyanato-3,3'-dimethyl-diphenylmethane, 1,5-naphthylene-diisocyanate, N,N'-(4,4'-dimethyl-3,3'-diisocyanato diphenyl)-uretdion, m-xylylene-diisocyanate, 2,4,4'-triisocyanato-diphenyl-ether, 4,4',4''-Triphenyl methane triisocyanate, Tris-(4-isocyanatophenyl)-thiophosphate, 1,6-hexamethylene diisocyanate, trimethylhexamethylene diisocyanate, 3-isocyanatomethyl-3,5,5-trimethyl cyclohexyl isocyanate (isophoron diisocyanate), Trans 1,4-cyclohexane diisocyanate, p-phenylene diisocyanate, tetramethyl-xylylene diisocyanate, 4,4'-dicyclohexyl methane diisocyanate, 2,2-bis-[4-(6-isocyanato-hexanoyl-oxy)-phenyl] propane, polymethylene-polyphenyl isocyanate, a reaction product of toluene diisocyanate and trimethylolpropane, a reaction product of hexamethylene diisocyanate and water or a mixture of these isocyanates.

15. Method according to one of Claims 10 to 14, characterised in that the prepolymer used for the production of the prepolymer (b) has 0.5- to 1.5-, preferably 0.8- to 1.2- times the NCO-content of the prepolymer (a) contained in the first component.

16. Method according to Claims 10 to 15, characterised in that the reactive compound used for the

production of the prepolymer (b) contains 2 to 6, preferably 2 to 3, in particular two reactive molecular groups containing hydrogen.

17. Method according to Claim 16, characterised in that the reactive compound is chosen from the group mercapto ethanol, mercapto propane diol, dimercapto propanol, amino ethanol, amino propanol, amino propane diol, N-methyl amino ethanol, N-methyl glucamine, amino phenol, hydroxyethyl piperazine, glycolic acid, lactic acid, thioglycolic acid, thiolactic acid, aminoacetic acid and lysine.

18. Method according to one of Claims 10 to 17, characterised in that the equivalent ratio NCO : H (active) of the two components amounts to from 0.8 : 1 to 5 : 1, preferably from 1 : 1 to 5 : 1, in particular from 1.2 : 1 to 2 : 1.

19. Use of two-component materials according to Claims 1 to 9 as adhesive materials for sealing and sticking insulating glass panes in buildings or glass panes in vehicle and aircraft construction.

**Revendications**

1. Composition à deux composants, réunissant un premier composant qui contient un prépolymère (a) à radicaux isocyanate terminaux et un second composant qui contient un prépolymère (b) comportant des radicaux terminaux réactifs vis-à-vis des radicaux isocyanate, ces deux composants constituant, après le mélange, une masse autodurcissante, le prépolymère (a) à radicaux isocyanate terminaux ayant été obtenu par réaction d'au moins un polyisocyanate monomère avec au moins un polyol ayant un poids moléculaire de plus de 1 000, dans un rapport équivalent NCO/OH de 1,3 : 1 à 3 : 1 et le prépolymère (b) contenu dans le second composant ayant été obtenu par réaction de l'équivalent d'un prépolymère (a) à radicaux isocyanate terminaux tel que défini ci-dessus avec 0,8 à 1,2 mol d'un composé comportant au moins 2 atomes d'hydrogène réactifs vis-à-vis des radicaux isocyanate, caractérisée en ce que le polyol utilisé pour l'élaboration du prépolymère (a) comporte une fonctionnalité OH de 2,2 à 4 et en ce que, lors de la préparation du prépolymère (b), on mélange un prépolymère (a) avec un mercapto-alcool ou amino-alcool ou avec un acide hydroxycarboxylique, mercapto-carboxylique ou aminocarboxylique.

2. Composition à deux composants suivant la revendication 1, caractérisée en ce que les prépolymères (a) et (b) offrent une même fonctionnalité.

3. Composition à deux composants suivant la revendication 1 ou 2, caractérisée en ce que les prépolymères (a) et (b) sont préparés à partir des mêmes isocyanates.

4. Composition à deux composants suivant la revendication 1 ou 2, caractérisée en ce que les prépolymères (a) et (b) sont préparés à partir de polyols de même composition chimique.

5. Composition à deux composants suivant l'une des revendications 1 à 4, caractérisée en ce que le polyisocyanate monomère utilisé pour préparer les prépolymères (a) et (b) est du tolylène-diisocyanate, du diphénylméthane-diisocyanate, du diphényl-4,4' diisocyanate, du diisocyanato-4,4' dichloro-3,3' diphényle, du diisocyanato-4,4' diméthoxy-3,3' diphényle, du diisocyanato-4,4' diphényl-3,3' diphényle, du diisocyanato-4,4' diméthyl-3,3' diphénylméthane, du naphtylène-1,5 diisocyanate, du N,N'-(diméthyl-4,4' diisocyanato-3,3' diphényl)-uretdione, du m-xylylène-diisocyanate, du triisocyanato-2,4,4' diphényléther, du triphényl-4',4',4'' méthane-triisocyanate, du tris (isocyanato-4 phényl)-thiophosphate, de l'hexaméthylène-diisocyanate-1,6, du triméthylhexaméthylène-diisocyanate, de l'isocyanatométhyl-3-triméthyl-3,5,5 cyclohexylisocyanate (isophoronediisocyanate), du trans-cyclohexanediisocyanate-1,4, du p-phénylène-diisocyanate, du tétraméthyl-xylylène-diisocyanate, du dicyclohexyl-4,4' méthane-diisocyanate, du bis-(isocyanato-6 hexanoyl-oxy)-4 phényl-2,2 propane, du polyméthylènepolyphénylisocyanate, un produit de réaction du toluène-diisocyanate avec du triméthylolpropane, un produit de réaction de l'hexaméthylène-diisocyanate avec l'eau, ou un mélange de ces isocyanates.

6. Composition à deux composants suivant l'une des revendications 1 à 5, caractérisée en ce que le prépolymère utilisé pour la préparation du prépolymère (b) présente une teneur en NCO qui est 0,5 à 1,5 fois, de préférence 0,8 à 1,2 fois, celle du prépolymère (a) contenu dans le premier composant.

7. Composition à deux composants suivant la revendication 1 à 6, caractérisée en ce que le composé réactif utilisé pour la préparation du prépolymère (b) contient 2 à 6, de préférence 2 à 3, et mieux 2, radicaux moléculaires contenant de l'hydrogène réactif.

8. Composition à deux composants suivant la revendication 7, caractérisée en ce que le composé réactif est choisi parmi les mercaptoéthanol, mercaptopropanediol, dimercaptopropanol, amino-éthanol, aminopropanol, aminopropanediol, N-méthylamino-éthanol N-méthylglucamine, aminophénol, hydroxyéthylpypérazine, acide glycolique, acide lactique, acide thioglycolique, acide thiolactique, acide aminoacétique et lysine.

9. Composition à deux composants suivant l'une des revendications précédentes, caractérisée en ce que le rapport équivalent NCO : H (actif) des deux composants vaut de 0,8 : 1 à 5 : 1, de préférence de 1 : 1 à 5 : 1, et mieux de 1,2 : 1 à 2 : 1.

10. Procédé de préparation d'un polyuréthane par durcissement d'une composition à deux composants, selon lequel on mélange entre eux un premier composant qui contient un prépolymère (a) à radicaux isocyanate terminaux et un second composant qui contient un prépolymère (b) comportant des radicaux terminaux réactifs vis-à-vis des radicaux isocyanate, ces deux composants constituant, après le mélange, une masse autodurcissante, le prépolymère (a) à radicaux isocyanate terminaux ayant été

obtenu par réaction d'au moins un polyisocyanate monomère avec au moins un polyol ayant un poids moléculaire de plus de 1 000, dans un rapport équivalent NCO/OH de 1,3 : 1 à 3 : 1 et le prépolymère (b) contenu dans le second composant ayant été obtenu par réaction de l'équivalent d'un prépolymère (a) à radicaux isocyanate terminaux tel que défini ci-dessus avec 0,8 à 1,2 mol d'un composé comportant au moins 2 atomes d'hydrogène réactifs vis-à-vis des radicaux isocyanate, caractérisée en ce que le polyol utilisé pour l'élaboration du prépolymère (a) comporte une fonctionnalité OH de 2,2 à 4 et en ce que, lors de la préparation du prépolymère (b), on mélange un prépolymère (a) avec un mercapto-alcool ou amino-alcool ou avec un acide hydroxycarboxylique, mercapto-carboxylique ou aminocarboxylique.

11. Procédé suivant la revendication 10, caractérisé en ce que les prépolymères (a) et (b) offrent une même fonctionnalité.

12. Procédé suivant la revendication 10 ou 11, caractérisé en ce que les prépolymères (a) et (b) sont préparés à partir des mêmes isocyanates.

13. Procédé suivant la revendication 10 ou 11, caractérisé en ce que les prépolymères (a) et (b) sont préparés à partir de polyols de même composition chimique.

14. Procédé suivant l'une des revendications 10 à 13, caractérisé en ce que le polyisocyanate monomère utilisé pour préparer les prépolymères (a) et (b) est du tolylène-diisocyanate, du diphénylméthane-diisocyanate, du diphényl-4,4' diisocyanate, du diisocyanato-4,4' dichloro-3,3' diphényle, du diisocyanato-4,4' diméthoxy-3,3' diphényle, du diisocyanato-4,4' diphényl-3,3' diphényle, du diisocyanato-4,4' diméthyl-3,3' diphénylméthane, du naphtylène-1,5 diisocyanate, du N,N'-(diméthyl-4,4' diisocyanato-3,3' diphényl)-uretdione, du m-xylylène-diisocyanate, du triisocyanato-2,4,4' diphényléther, du triphényl-4',4',4'' méthane-triisocyanate, du tris (isocyanato-4 phényl)-thiophosphate, de l'hexaméthylène-diisocyanate-1,6 du triméthylhexaméthylène-diisocyanate, de l'isocyanatométhyl-3-triméthyl-3,5,5 cyclohexylisocyanate (isophorone-diisocyanate), du transcyclohexanediisocyanate-1,4, du p-phénylène-diisocyanate, du tétraméthylxylylène-diisocyanate, du dicyclohexyl-4,4' méthane-diisocyanate, du bis-[(isocyanato-6 hexanoyl-oxy)-4 phényl]-2,2 propane, du polyméthylènepolyphénylisocyanate, un produit de réaction du toluène-diisocyanate avec du triméthylolpropane, un produit de réaction de l'hexaméthylène-diisocyanate avec l'eau, ou un mélange de ces isocyanates.

15. Procédé suivant l'une des revendications 10 à 14, caractérisé en ce que le prépolymère utilisé pour la préparation du prépolymère (b) présente une teneur en NCO qui est 0,5 à 1,5 fois, de préférence 0,8 à 1,2 fois, celle du prépolymère (a) contenu dans le premier composant.

16. Procédé suivant la revendication 10 à 15, caractérisé en ce que le composé réactif utilisé pour la préparation du prépolymère (b) contient 2 à 6, de préférence 2 à 3, et mieux 2, radicaux moléculaires contenant de l'hydrogène réactif.

17. Procédé suivant la revendication 16, caractérisé en ce que le composé réactif est choisi parmi les mercapto-éthanol, mercaptopropanediol, dimercaptopropanol, amino-éthanol, aminopropanol, aminopropanediol, N-méthylamino-éthanol, N-méthylglucamine, aminophénol, hydroxyéthylpypérazine, acide glycolique, acide lactique, acide thioglycolique, acide thiolactique, acide amino-acétique et lysine.

18. Procédé suivant l'une des revendications 10 à 17, caractérisé en ce que le rapport équivalent NCO : H (actif) des deux composants vaut de 0,8 : 1 à 5 : 1, de préférence de 1 : 1 à 5 : 1, et mieux de 1,2 : 1 à 2 : 1.

19. Utilisation de compositions à deux composants suivant les revendications 1 à 9 en tant que masses de collage pour réaliser l'étanchéité et le collage de vitres isolantes dans des bâtiments ou de vitres dans la construction automobile et la construction aéronautique.